# EUROPEAN PATENT SPECIFICATION

(11) **EP 4 468 168 B1**
(45) Date of publication and mention of the grant of the patent: **17.06.2026**
(21) Application number: 23755709.5
(22) Date of filing: 07.02.2023
(51) Int. Cl.: G06F 3/06, G06F 16/25, G06F 11/14

(54) **DATA STORAGE SYSTEM AND METHOD**
DATENSPEICHERSYSTEM UND -VERFAHREN
SYSTÈME ET PROCÉDÉ DE STOCKAGE DE DONNÉES

(30) Priority: 16.02.2022 CN 202210140120
(43) Date of publication of application: 27.11.2024
(73) Proprietor: Huawei Technologies Co., Ltd., Shenzhen, Guangdong 518129 (CN)
(72) Inventor: PAN, Qian, Shenzhen, Guangdong 518129 (CN); WANG, Qian, Shenzhen, Guangdong 518129 (CN); REN, Lang, Shenzhen, Guangdong 518129 (CN); QIN, Pengfei, Shenzhen, Guangdong 518129 (CN); WANG, Xianhong, Shenzhen, Guangdong 518129 (CN)
(74) Representative: Goddar, Heinz J.
(86) International application number: PCT/CN2023/074711
(87) International publication number: WO 2023/155706

(56) References cited:
- CN-A- 109 729 129
- CN-A- 109 743 199
- CN-A- 109 951 525
- CN-A- 110 377 395
- CN-A- 111 176 664
- CN-A- 112 015 517
- CN-A- 113 127 526
- US-A1- 2017 286 516
- US-A1- 2020 034 240
- US-A1- 2021 365 290
- NGUYEN NGUYEN ET AL: "Toward Highly Scalable Load Balancing in Kubernetes Clusters", IEEE COMMUNICATIONS MAGAZINE, IEEE SERVICE CENTER, PISCATAWAY, US, vol. 58, no. 7, 1 July 2020 (2020-07-01), pages 78 - 83, XP011802034, ISSN: 0163-6804, [retrieved on 20200806], DOI: 10.1109/MCOM.001.1900660
- VYAS JAY ET AL: "Core Kubernetes textbook", 1 January 2022 (2022-01-01), XP093148474, Retrieved from the Internet <URL:https://sgp1.vultrobjects.com/books/Infrastructure/Core%20Kubernetes.pdf> [retrieved on 20240405]

## Description

### TECHNICAL FIELD

This application relates to the field of information technologies, and in particular, to a data storage system and method.

### BACKGROUND

With development and popularity of a container technology represented by an application container engine (a docker), the container technology is gradually accepted and popularized in the industry. Problems resolved by a container engine and mirroring that are of a single machine are very limited. If a container is to be used directly in a production environment, a container management cluster needs to be depended on. The container management cluster usually aims to resolve a problem such as orchestration, scheduling, or cluster management of the container. Currently, the container management cluster in the industry is mainly a Kubernetes cluster.

The Kubernetes cluster may use an ETCD cluster as a storage backend of data. Various storage nodes in the ETCD cluster implement data synchronization of a plurality of storage nodes in the ETCD cluster based on a distributed consensus algorithm (Raft), and select a primary storage node from the plurality of storage nodes. In the ETCD cluster, at least three storage nodes need to be deployed, to ensure data storage with high availability.

In a scenario in which a quantity of nodes is limited, three nodes deployed in the ETCD cluster may not be ensured. Consequently, the consensus algorithm Raft cannot be run to implement high availability of data storage.

US 2020/034240 A1 discloses: Providing continuous replication for container management system by automatically configuring a pod having a network block device (NBD) container maintained by an NBD server, attaching a back-end device to the NBD server as a persistent volume on a software-defined storage, intercepting input/output (I/O) communication to the NBD server to expose a volume over the NBD, intercepting writes to the exposed volume and writing them to the persistent volume; and sending the intercepted I/O communication to a journal volume and a remote replication server container which has the persistent volume attached thereto.

US 2017/286516 A1 discloses implementation of a cloud service for running, monitoring, and maintaining cloud distributed database deployments and in particular examples, provides cloud-based services to run, monitor and maintain deployments of the known MongoDB database. Various embodiments provide services, interfaces, and manage provisioning of dedicated servers for the distributed database instances (e.g., MongoDB instances). Further aspects, including providing a database as a cloud service that eliminates the design challenges associated with many distributed database implementations, while allowing the client's input on configuration choices in building the database.

### SUMMARY

This application provides a data storage system and method. A storage cluster in the data storage system may be for storing data in a container management cluster. The storage cluster may be provided with two storage nodes, and the two storage nodes are respectively a primary storage node and a secondary storage node. High availability of data storage is implemented in a primary-and-secondary manner.

According to a first aspect, this application provides a data storage system, including a storage cluster. The storage cluster includes two storage nodes, and the two storage nodes are respectively a primary storage node and a secondary storage node. The primary storage node is configured to obtain data from a container management cluster, store the data in a local database of the primary storage node, and send the data to the secondary storage node. Correspondingly, the secondary storage node is configured to receive the data from the primary storage node, and store the data in a local database of the secondary storage node.

In this way, the data is stored in both the local database of the primary storage node and the local database of the secondary storage node, thereby ensuring high availability of data storage. In addition, one storage cluster may include only two storage nodes, thereby reducing a quantity of storage nodes.

The primary storage node further includes a proxy interface, and the proxy interface of the primary storage node communicates with an application programming interface (API) server in the container management cluster. The proxy interface of the primary storage node is for receiving a first request from the API server, where the first request includes the data to be stored in the local database of the primary storage node. Then, the proxy interface of the primary storage node performs protocol conversion on the first request, to obtain a second request supported by the local database of the primary storage node. Then, the proxy interface of the primary storage node is further for sending the second request to the local database of the primary storage node, and the local database of the primary storage node is configured to store the data included in the second request.

In this way, the proxy interface of the primary storage node may convert a request from the API server in the container management cluster into a request complying with an interface of the local database of the primary storage node. For example, when the local database of the primary storage node is MySQL, the proxy interface of the primary storage node converts the request from the API server into a request complying with a MySQL interface, so that the container management cluster reads and writes the data in the local database of the primary storage node.

In a possible implementation, the data storage system further includes an arbitration node, the arbitration node is separately connected to the primary storage node and the secondary storage node, and the arbitration node is configured to monitor working statuses of the primary storage node and the secondary storage node. When determining that the working status of the primary storage node changes from "normal" to "failed" and the working status of the secondary storage node is "normal", the arbitration node switches the secondary storage node to the primary storage node in the storage cluster. Correspondingly, when the container management cluster needs to store the data in the storage cluster, the container management cluster may send the data to the new primary storage node, and the new primary storage node may store the data.

This helps ensure high availability of data in the entire storage system. In addition, the arbitration node monitors the working statuses of the primary storage node and the secondary storage node, and indicates the secondary storage node to switch to the primary storage node, to help avoid a split-brain problem caused by mutual monitoring between the primary storage node and the secondary storage node.

In a possible implementation, there are a plurality of storage clusters. The data storage system further includes an arbitration node, and the arbitration node is separately connected to two storage nodes in each storage cluster. The arbitration node is configured to monitor working statuses of the two storage nodes in each storage cluster. For any one of the plurality of storage clusters, when determining that a working status of a primary storage node in the storage cluster changes from "normal" to "failed" and a working status of a secondary storage node is "normal", the arbitration node switches the secondary storage node in the storage cluster to the primary storage node in the storage cluster. Correspondingly, when the container management cluster needs to store the data in the storage cluster, the container management cluster may send the data to the new primary storage node, and the new primary storage node may store the data.

This helps ensure high availability of data in the entire storage system. In addition, the arbitration node monitors the working statuses of the primary storage node and the secondary storage node, and indicates the secondary storage node to switch to the primary storage node, to help avoid a split-brain problem caused by mutual monitoring between the primary storage node and the secondary storage node. In addition, the arbitration node monitors working statuses of primary storage nodes and secondary storage nodes in the plurality of storage clusters, to help reduce deployment costs in the storage system. In addition, when a quantity of storage clusters gradually increases, the deployment costs that can be saved in the storage system are also larger.

In a possible implementation, when switching the secondary storage node to the primary storage node in the storage cluster, the arbitration node is specifically configured to send a switch indication to the secondary storage node. The switch indication indicates the secondary storage node to switch to the primary storage node in the storage cluster. Correspondingly, the secondary storage node is further configured to switch to the primary storage node in the storage cluster based on the switch indication. In this way, the secondary storage node in the storage cluster switches to the primary storage node in the storage cluster based on an indication of the arbitration node, thereby helping ensure high availability and orderliness of data in the entire storage system.

In a possible implementation, the local database includes one or more of Oracle, MySQL, MongoDB, Redis, or the like. Specifically, both the local database of the primary storage node and the local database of the secondary storage node may include one or more of Oracle, MySQL, MongoDB, Redis, or the like.

In a possible implementation, the container management cluster is a Kubernetes cluster.

According to a second aspect, this application provides a data storage method. The method is applied to a data storage system. The data storage system includes a storage cluster, the storage cluster includes two storage nodes, and the two storage nodes are respectively a primary storage node and a secondary storage node. The method includes: The primary storage node obtains data from a container management cluster, stores the data in a local database of the primary storage node, and sends the data to the secondary storage node. The secondary storage node stores the data in a local database of the secondary storage node.

The primary storage node further includes a proxy interface, and the proxy interface of the primary storage node communicates with an API server in the container management cluster. That the primary storage node obtains data from a container management cluster, stores the data in a local database of the primary storage node may specifically include: The proxy interface of the primary storage node receives a first request from the API server, where the first request includes the data to be stored in the local database of the primary storage node. The proxy interface of the primary storage node performs protocol conversion on the first request, to obtain a second request supported by the local database of the primary storage node; and sends the second request to the local database of the primary storage node. The local database of the primary storage node stores the data included in the second request.

In a possible implementation, the data storage system further includes an arbitration node, and the arbitration node is separately connected to the primary storage node and the secondary storage node. The arbitration node monitors working statuses of the primary storage node and the secondary storage node; and when the working status of the primary storage node changes from "normal" to "failed" and the working status of the secondary storage node is "normal", the arbitration node switches the secondary storage node to the primary storage node in the storage cluster.

In a possible implementation, there are a plurality of storage clusters. The data storage system further includes an arbitration node, and the arbitration node is separately connected to two storage nodes in each storage cluster. The arbitration node monitors working statuses of the two storage nodes in each storage cluster; and when a working status of a primary storage node changes from "normal" to "failed" and a working status of a secondary storage node is "normal" in any one of the plurality of storage clusters, the arbitration node may switch the secondary storage node in the storage cluster to the primary storage node in the storage cluster.

In a possible implementation, that the arbitration node switches the secondary storage node to the primary storage node in the storage cluster includes: The arbitration node sends a switch indication to the secondary storage node, where the switch indication indicates the secondary storage node to switch to the primary storage node in the storage cluster. The secondary storage node switches to the primary storage node in the storage cluster based on the switch indication.

In a possible implementation, the local database includes one or more of Oracle, MySQL, MongoDB, Redis, or the like. Specifically, both the local database of the primary storage node and the local database of the secondary storage node may include one or more of Oracle, MySQL, MongoDB, Redis, or the like.

In a possible implementation, the container management cluster is a Kubernetes cluster.

According to a third aspect, this application provides a data storage device, including a processor. The processor is connected to a memory, the memory is configured to store a computer program, and the processor is configured to execute the computer program stored in the memory, to enable the data storage device to perform the method in any one of the second aspect or the possible implementations of the second aspect.

According to a fourth aspect, this application provides a computer-readable storage medium, where the computer-readable storage medium stores a computer program or instructions. When the computer program or the instructions are executed by a data storage device, the method in any one of the second aspect or the possible implementations of the second aspect is implemented.

According to a fifth aspect, this application provides a computer program product, where the computer program product includes a computer program or instructions. When the computer program or the instructions are executed by a data storage device, the data storage device implements the method in any one of the second aspect or the possible implementations of the second aspect.

For technical effects that can be achieved in any one of the foregoing second aspect to the fifth aspect, refer to descriptions of beneficial effects in the first aspect. Details are not described herein again.

### BRIEF DESCRIPTION OF DRAWINGS

FIG. 1 is a diagram of an architecture of a system according to this application;
FIG. 2 is a diagram of an architecture of a data storage system according to this application;
FIG. 3 is a diagram of proxy interfaces in primary and secondary storage nodes according to this application;
FIG. 4 is a diagram of an architecture of another data storage system according to this application;
FIG. 5 is a diagram of an architecture of still another data storage system according to this application; and
FIG. 6 is a schematic flowchart of a data storage method according to this application.

### DESCRIPTION OF EMBODIMENTS

The following describes in detail embodiments of this application with reference to the accompanying drawings.

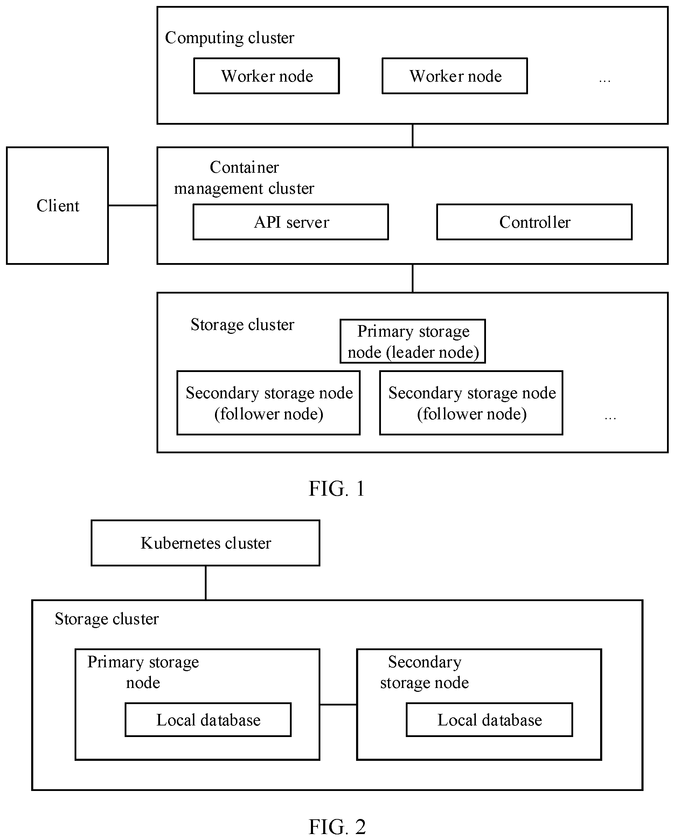

For example, FIG. 1 is a diagram of an architecture of a system according to this application. For example, the system includes a client, a container management cluster, a computing cluster, and a storage cluster.

The container management cluster may be for automatic deployment, capacity expansion, and operation and maintenance of a container cluster. For example, the container management cluster may include an application programming interface (API) server and a controller. The API server may serve as an external interface of the container management cluster. The client, computing cluster, and storage cluster all may access the container management cluster through the API server.

For example, the API server may be used by the client to deliver a container set creation request to the container management cluster. The controller may obtain the container set creation request from the API server, create a container set (pod) based on the container set creation request, and schedule the container set to a worker node for running. The container management cluster may be a Kubernetes cluster.

The computing cluster includes a plurality of worker nodes. The worker node may be a physical machine or a virtual machine (VM). The worker node may be deployed in different areas, or may use different operator networks. The worker node may run the container set in the worker node based on scheduling of the controller.

The storage cluster is configured to store data in the container management cluster, and the storage cluster may be an ETCD cluster.

Further, the storage cluster may include N storage nodes. The N storage nodes may further include a primary storage node (which may be referred to as a leader node) and a plurality of secondary storage nodes (which may be referred to as follower nodes). N nodes in the storage cluster may use a consensus algorithm Raft to perform leader election (or election) or data synchronization in a cluster.

In an election process, if a follower node in the storage cluster determines that a heartbeat from the leader node is not received in an election periodicity (election timeout), the follower node initiates an election procedure.

After switching the follower node to a candidate node, the follower node sends a request to another follower node in the storage cluster, to ask the another follower node whether to elect the follower node as the leader node. After receiving acceptance votes from (N/2+1) or more nodes in the storage cluster, the candidate node switches to the leader node, starts to receive and save data in the container management cluster, and synchronizes the data to the another follower node. The leader node depends on periodically sending the heartbeat to the follower node to maintain a status thereof.

In addition, if the another follower node does not receive the heart beat from the leader node during the election timeout, the another follower node also switches a status thereof to candidate and initiates election.

In a data synchronization process, after receiving the data from the container management cluster, the leader node in the storage cluster may first record the data, and then synchronize the data to the follower node through the heartbeat. The follower node records the data after receiving the data, and sends an acknowledgement (ACK) to the leader node. When the leader node receives ACKs sent from (N/2+1) or more follower nodes, the leader node sets the data to being submitted, and persistently stores the data in a local database. Then, the leader node notifies, in a next heartbeat, the follower node to store the data in a local database of the follower node.

Because the storage cluster uses the consensus algorithm Raft during the election or data synchronization, 2n+1 nodes need to be deployed in the storage cluster. Alternatively, it is understood that at least three nodes need to be deployed in the storage cluster. That is, N is an integer greater than or equal to three. However, in a scenario in which a quantity of nodes is limited, three or more nodes deployed in the storage cluster may not be ensured. Correspondingly, the storage cluster cannot run the consensus algorithm Raft to implement high availability of data storage.

Therefore, this application provides a data storage system. The data storage system includes a storage cluster, and the storage cluster may be for storing data in a container management cluster. The storage cluster may be provided with two nodes, and the two nodes are respectively referred to as a primary storage node and a secondary storage node. The primary storage node and the secondary storage node may implement high availability of data storage in the container management cluster in a primary-and-secondary manner.

For ease of description, an example in which the container management cluster is a Kubernetes cluster is used for description below. Certainly, the container management cluster may alternatively be a cluster other than the Kubernetes cluster. This is not limited in this application.

For example, FIG. 2 is a diagram of an architecture of the data storage system according to this application. A storage cluster includes a primary storage node and a secondary storage node. The primary storage node is configured to obtain data (referred to as target data below) from a Kubernetes cluster corresponding to the storage cluster, and store the target data in a local database of the primary storage node. The primary storage node may further send the target data to the secondary storage node. Correspondingly, the secondary storage node receives the target data from the primary storage node, and synchronizes the target data to a local database of the secondary storage node.

In this way, the target data is stored in both the local database of the primary storage node and the local database of the secondary storage node. Further, the local database of the primary storage node may be understood as a primary database, and the local database of the secondary storage node may be understood as a secondary database. In this application, high availability of data storage is ensured in a primary-and-secondary database manner. In addition, one storage cluster may include only two storage nodes, thereby reducing a quantity of storage nodes.

In a possible implementation, after obtaining the target data of the Kubernetes cluster, the primary storage node in the storage cluster may store the target data in the local database of the primary storage node in a key-value pair (K-V) manner.

Optionally, in the local database of the primary storage node, each key may further correspond to a plurality of versions. For example, if the primary storage node obtains (key1, value1) for the first time, and a version corresponding to (key1, value1) is rev1, the primary storage node may store rev1 and (key1, value1) in the local database of the primary storage node. Further, if the primary storage node obtains (key1, value1_new) for the second time, and a version corresponding to (key1, value1_new) is rev2, the primary storage node may store rev2 and (key1, value1_new) in the local database of the primary storage node again.

In this way, when querying the local database of the primary storage node for data, the Kubernetes cluster may enter a requested version and a key, to obtain a corresponding value through querying, thereby implementing multi-version concurrency control in the local database of the primary storage node.

Further, the local database of the secondary storage node may implement a storage mechanism similar to that of the local database of the primary storage node. When the primary storage node fails, a data storage and query service is provided.

Further, the primary storage node may further include a proxy interface, and the proxy interface communicates with an API server in the Kubernetes cluster. In addition, the secondary storage node may also include a proxy interface, for receiving a request from the API server when the secondary storage node switches to the primary storage node in the storage cluster. For details, refer to the following primary-and-secondary switch process.

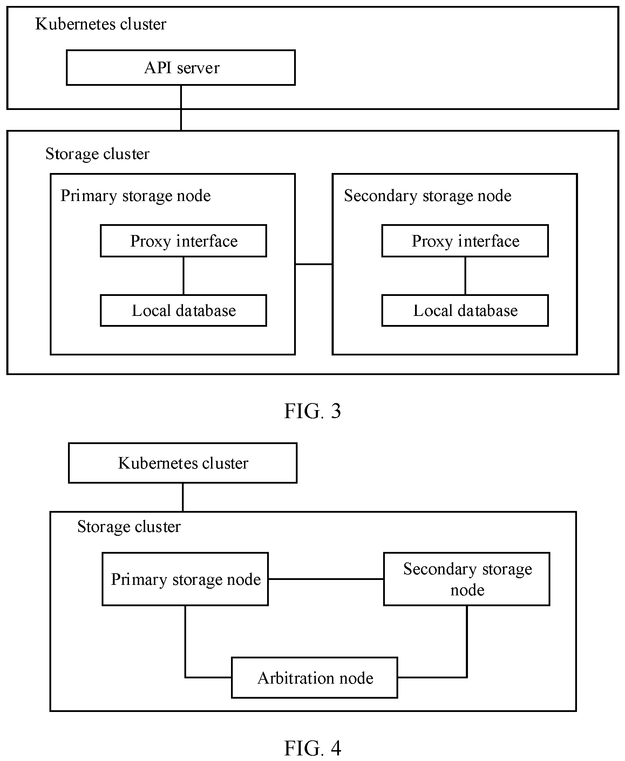

Refer to a diagram of proxy interfaces in the primary and secondary storage nodes shown in FIG. 3.

The proxy interface of the primary storage node may be for being compatible with an ETCD interface, and translating a request in the Kubernetes cluster into a request that can be parsed by the local database of the primary storage node. It is understood that, in this application, because the storage cluster including the primary storage node and the secondary storage node replaces an ETCD cluster, and the request obtained by the primary storage node from the API server is still a request complying with the ETCD cluster interface, to store target data in the request in the local database, the primary storage node may convert, through the proxy interface, the request that is from the Kubernetes cluster and complies with the ETCD cluster interface into a request complying with the interface of the local database of the primary storage node in this application.

For example, the local database of the primary storage node includes one or more of Oracle, MySQL, MongoDB, Redis, or the like. For example, when the local database of the primary storage node is MySQL, the proxy interface of the primary storage node converts the request that is from the Kubernetes cluster and complies with the ETCD cluster interface into a request complying with a MySQL interface.

In a specific implementation, the proxy interface in the primary storage node may receive a first request from the API server. The first request may be a write request, and the first request includes the target data to be written into the local database of the primary storage node. The proxy interface of the primary storage node performs protocol conversion on the first request, to obtain a second request supported by the local database of the primary storage node. It may be understood that, a difference between the second request and the first request lies in that protocol formats are different, but the second request and the first request include the same target data. Then, the proxy interface of the primary storage node may send the second request to the local database of the primary storage node. The local database of the primary storage node stores the target data in the second request.

For example, the target data included in the first request is a key-value and a version corresponding to a key. For example, the first request includes (key1, value1_new) and a version rev2, and the proxy interface of the primary storage node performs protocol conversion on the first request, to obtain the second request, where the second request still includes (key1, value1_new) and the version rev2. The proxy interface of the primary storage node sends the second request to the local database of the primary storage node, and the local database of the primary storage node stores rev2 and (key1, value1_new).

It should be noted that, the API server may randomly send the first request to the primary storage node or the secondary storage node. When the primary storage node receives the first request, the primary storage node determines that the primary storage node is a primary storage node in the current storage cluster, and then performs protocol conversion on the first request to obtain the second request.

When the secondary storage node receives the first request, the secondary storage node determines that the secondary storage node is not a primary storage node in the current storage cluster, and forwards the first request to the primary storage node. Correspondingly, the primary storage node receives the first request and determines that the primary storage node is a primary storage node in the current storage cluster, and performs protocol conversion on the first request to obtain the second request.

In addition, the proxy interface of the primary storage node may receive a third request from the API server. The third request may be a read request, and the third request includes index information of to-be-read data. The proxy interface of the primary storage node performs protocol conversion on the third request, to obtain a fourth request supported by the local database of the primary storage node. It may be understood that, a difference between the third request and the fourth request lies in that protocol formats are different, but the third request and the fourth request include the same index information of the to-be-read data. Then, the proxy interface of the primary storage node may send the fourth request to the local database of the primary storage node. The local database of the primary storage node returns corresponding data based on the index information in the fourth request.

For example, the index information of the to-be-read data included in the third request is a key and a version corresponding to the key. For example, the third request includes a key 1 and a version rev2, and the proxy interface of the primary storage node performs protocol conversion on the third request, to obtain the fourth request, where the fourth request still includes the key 1 and the version rev2. The proxy interface of the primary storage node sends the fourth request to the local database of the primary storage node, and the local database of the primary storage node queries for and returns a value1_new based on the key 1 and the version rev2.

It should be noted that, the API server may randomly send the third request to the primary storage node or the secondary storage node. When the primary storage node receives the third request, the primary storage node determines that the primary storage node is a primary storage node in the current storage cluster, and then performs protocol conversion on the third request to obtain the fourth request.

When the secondary storage node receives the third request, the secondary storage node determines that the secondary storage node is not a primary storage node in the current storage cluster, and forwards the third request to the primary storage node. Correspondingly, the primary storage node receives the third request and determines that the primary storage node is a primary storage node in the current storage cluster, and performs protocol conversion on the third request to obtain the fourth request.

In a possible implementation, data stored in the local database of the primary storage node may be specifically data of a container set of the Kubernetes cluster, for example, description information of the container set. The API server may further listen to a change of a key in the local database of the primary storage node through the proxy interface of the primary storage node, in other words, listen to a change of the description information of the container set. Correspondingly, when detecting, through listening, that the description information of the container set in the local database of the primary storage node changes, the API server manages, based on changed description information of the container set, the container set managed in the Kubernetes cluster, for example, deleting, starting, or scheduling the container set.

Optionally, the storage cluster may further include an arbitration node, and the arbitration node may be separately connected to the primary storage node and the secondary storage node. Refer to a diagram of an architecture of another data storage system according to this application shown in FIG. 4.

The arbitration node is configured to monitor working statuses of the primary storage node and the secondary storage node, where a working status may be "normal" or "failed". For example, the arbitration node may periodically monitor a heartbeat of the primary storage node, to determine whether the working status of the primary storage node is "normal". Similarly, the arbitration node periodically monitors a heartbeat of the secondary storage node, to determine whether the working status of the secondary storage node is "normal".

When determining that the working status of the primary storage node changes from "normal" to "failed" and the working status of the secondary storage node is "normal", the arbitration node switches the secondary storage node to the primary storage node in the storage cluster. Correspondingly, when the Kubernetes cluster needs to store the target data in the storage cluster, the Kubernetes cluster may send the target data to the new primary storage node, and the new primary storage node may store the target data, to help ensure high availability of data in the entire storage system.

Optionally, the arbitration node may send a switch indication to the secondary storage node, where the switch indication indicates the secondary storage node to switch to the primary storage node in the storage cluster. Correspondingly, after receiving the switch indication, the secondary storage node switches, in response to the switch indication, the secondary storage node to the primary storage node in the storage cluster.

Further, only when determining that the working status of the primary storage node changes from "normal" to "failed" and the working status of the secondary storage node is "normal", the arbitration node switches the secondary storage node to the primary storage node in the storage cluster. The arbitration node determines, based on the working statuses of the primary and secondary storage nodes, one of the two storage nodes as the primary storage node. This helps avoid a split-brain problem caused by mutual monitoring of the primary and secondary storage nodes. Explanations are as follows: In a process in which the primary and secondary storage nodes monitor each other, if a data link between the primary and secondary storage nodes is disconnected (where the primary storage node does not fail), the secondary storage node may mistakenly consider that the primary storage node fails and actively switch the secondary storage node to the primary storage node, causing a problem that two primary storage nodes exist (that is, the split-brain problem).

In this application, the arbitration node may be alternatively deployed outside the storage cluster. It may alternatively be understood that, the storage system includes the storage cluster and the arbitration node. The arbitration node may be deployed together with an existing node. For example, the arbitration node is deployed together with the API server or a controller in the Kubernetes cluster. For another example, the arbitration node is deployed together with a worker node in a computing cluster. Alternatively, hardware such as a router in a cluster may be used as the arbitration node. In this way, the split-brain problem can be avoided without adding additional hardware.

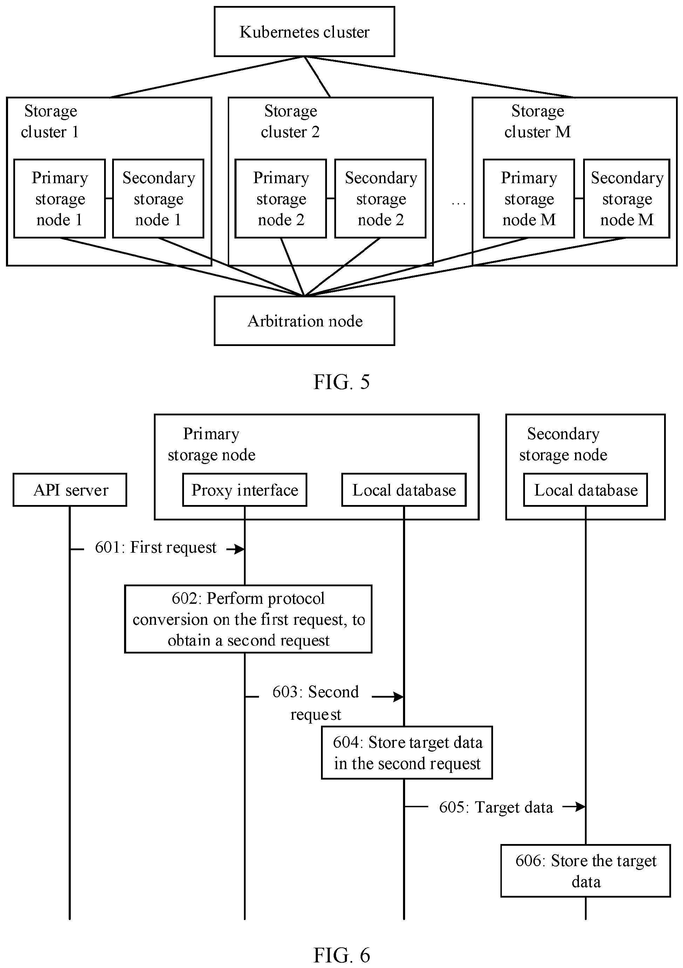

To expand a scale of the data storage system, for example, FIG. 5 is a diagram of an architecture of still another data storage system. In the data storage system, M storage clusters (represented as a storage cluster 1 to a storage cluster M) are deployed, and each storage cluster includes a primary storage node and a secondary storage node. M is an integer greater than or equal to 2. Further, the data storage system may include an arbitration node. The arbitration node is separately connected to the primary storage node and the secondary storage node in each storage cluster, to monitor working statuses of the primary storage node and the secondary storage node in each storage cluster.

For example, a storage cluster K includes a primary storage node K and a secondary storage node K, where K is any integer from 1 to M. The arbitration node separately monitors working statuses of the primary storage node K and the secondary storage node K. In a monitoring periodicity, if determining that the working status of the primary storage node K changes from "normal" to "failed" and the working status of the secondary storage node K is "normal", the arbitration node indicates the secondary storage node K to switch to a primary storage node in the storage cluster K.

For an implementation in which the arbitration node indicates the secondary storage node K to switch to the primary storage node in the storage cluster K, refer to the foregoing implementation of a single storage cluster.

This helps avoid a split-brain problem in the storage cluster. In addition, the arbitration node monitors working statuses of the primary storage node and the secondary storage node in each of the M storage clusters. For example, when M=3, the entire storage system needs to include only one arbitration node and three pairs of primary and secondary nodes, that is, a total of seven nodes, to complete deployment of the storage system. This can further help reduce deployment costs in the storage system. In addition, when a quantity of storage clusters gradually increases, the deployment costs saved in the storage system are also larger.

Further, from the storage cluster 1 to the storage cluster M, local databases of the primary storage nodes in the storage clusters may form a primary database. From the storage cluster 1 to the storage cluster M, local databases of the secondary storage nodes in the storage clusters may form a secondary database. In this application, the target data is stored in both the primary database and the secondary database, to ensure high availability of data storage in a primary-and-secondary database manner.

For ease of description, FIG. 4 and FIG. 5 merely show examples of the primary storage node and the secondary storage node included in the storage cluster. Further, each storage node also includes the local database and the proxy interface. In FIG. 2 to FIG. 5, the Kubernetes cluster also includes the API server, the controller, and the like.

Based on the foregoing content and a same concept, FIG. 6 is a schematic flowchart of a data storage method according to this application. The data storage method is applicable to the data storage systems shown in FIG. 2 to FIG. 5.

The data storage method includes the following steps.

Step 601: A proxy interface of a primary storage node receives a first request from an API server, where the first request includes target data to be written into a local database of the primary storage node.

Step 602: The proxy interface of the primary storage node performs protocol conversion on the first request, to obtain a second request supported by the local database of the primary storage node, where the second request includes the target data.

Step 603: The proxy interface of the primary storage node sends the second request to the local database of the primary storage node.

Step 604: The local database of the primary storage node stores the target data in the second request.

Step 605: The local database of the primary storage node sends the target data to a local database of a secondary storage node.

Step 606: The local database of the secondary storage node stores the target data.

For a step that is not described in detail in FIG. 6, refer to descriptions in the related embodiments in FIG. 2 to FIG. 5.

Based on the foregoing content and a same concept, this application provides a data storage device, including a processor. The processor is connected to a memory, the memory is configured to store a computer program, and the processor is configured to execute the computer program stored in the memory, to enable the data storage device to perform the method in the related embodiment in FIG. 6.

Based on the foregoing content and a same concept, this application provides a computer-readable storage medium. The computer-readable storage medium stores a computer program or instructions. When the computer program or the instructions are executed by a data storage device, the method in the related embodiment in FIG. 6 is implemented.

Based on the foregoing content and a same concept, this application provides a computer program product. The computer program product includes a computer program or instructions. When the computer program or the instructions are executed by a data storage device, the data storage device implements the method in the related embodiment in FIG. 6.

It may be understood that, various numbers in embodiments of this application are merely used for differentiation for ease of description, and are not used to limit the scope of embodiments of this application. Sequence numbers of the foregoing processes do not mean execution sequences, and the execution sequences of the processes should be determined based on functions and internal logic of the processes.

It is clear that a person skilled in the art may make various modifications and variations to this application without departing from the protection scope of this application. This application is intended to cover these modifications and variations of this application provided that they fall within the scope of protection defined by the following claims.

## Claims

1. A data storage system, comprising:
a storage cluster, wherein the storage cluster comprises two storage nodes, and the two storage nodes are respectively a primary storage node and a secondary storage node;
the primary storage node is configured to obtain data from a container management cluster, store the data in a local database of the primary storage node, and send the data to the secondary storage node; and
the secondary storage node is configured to store the data in a local database of the secondary storage node,
wherein a proxy interface of the primary storage node communicates with an application programming interface server API server in the container management cluster; **characterised in that**:
the proxy interface of the primary storage node is configured to perform protocol conversion on a first request from the API server, to obtain a second request supported by the local database of the primary storage node; and send the second request to the local database of the primary storage node; and
the local database of the primary storage node is configured to store the data comprised in the second request.

2. The system according to claim 1, wherein the data storage system further comprises an arbitration node, and the arbitration node is separately connected to the primary storage node and the secondary storage node; and
the arbitration node is configured to:
monitor working statuses of the primary storage node and the secondary storage node; and
when determining that the working status of the primary storage node changes from "normal" to "failed" and the working status of the secondary storage node is "normal", switch the secondary storage node to the primary storage node in the storage cluster.

3. The system according to claim 1, wherein there are a plurality of storage clusters, the data storage system further comprises an arbitration node, and the arbitration node is separately connected to two storage nodes in each storage cluster; and
the arbitration node is configured to:
monitor working statuses of the two storage nodes in each storage cluster; and
when determining that a working status of a primary storage node changes from "normal" to "failed" and a working status of a secondary storage node is "normal" in any one of the plurality of storage clusters, switch the secondary storage node in the storage cluster to the primary storage node in the storage cluster.

4. The system according to claim 2 or 3, wherein when switching the secondary storage node to the primary storage node in the storage cluster, the arbitration node is specifically configured to send a switch indication to the secondary storage node, wherein the switch indication indicates the secondary storage node to switch to the primary storage node in the storage cluster; and
the secondary storage node is further configured to switch to the primary storage node in the storage cluster based on the switch indication.

5. The system according to any one of claims 1 to 4, wherein the container management cluster is a Kubernetes cluster.

6. A data storage method, applied to a data storage system, wherein the data storage system comprises a storage cluster, the storage cluster comprises two storage nodes, and the two storage nodes are respectively a primary storage node and a secondary storage node; and
the method comprises:
obtaining, by the primary storage node, data from a container management cluster, storing the data in a local database of the primary storage node, and sending the data to the secondary storage node; and
storing, by the secondary storage node, the data in a local database of the secondary storage node,
wherein a proxy interface of the primary storage node communicates with an interface server API server in the container management cluster; and
the obtaining, by the primary storage node, data from a container management cluster, storing the data in a local database of the primary storage node **characterised in that** it comprises:
receiving, by the proxy interface of the primary storage node, a first request from the API server (601);
performing protocol conversion on the first request, to obtain a second request supported by the local database of the primary storage node (602);
and sending the second request to the local database of the primary storage node (603); and
storing, by the local database of the primary storage node, the data comprised in the second request (604).

7. The method according to claim 6, wherein the data storage system further comprises an arbitration node, and the arbitration node is separately connected to the primary storage node and the secondary storage node;
the arbitration node monitors working statuses of the primary storage node and the secondary storage node; and
when the working status of the primary storage node changes from "normal" to "failed" and the working status of the secondary storage node is "normal", the arbitration node switches the secondary storage node to the primary storage node in the storage cluster.

8. The method according to claim 6, wherein there are a plurality of storage clusters, the data storage system further comprises an arbitration node, and the arbitration node is separately connected to two storage nodes in each storage cluster;
the arbitration node monitors working statuses of the two storage nodes in each storage cluster; and
when a working status of a primary storage node changes from "normal" to "failed" and a working status of a secondary storage node is "normal" in any one of the plurality of storage clusters, the arbitration node switches the secondary storage node in the storage cluster to the primary storage node in the storage cluster.

9. The method according to claim 7 or 8, wherein that the arbitration node switches the secondary storage node to the primary storage node in the storage cluster comprises:
sending, by the arbitration node, a switch indication to the secondary storage node, wherein the switch indication indicates the secondary storage node to switch to the primary storage node in the storage cluster; and
switching, by the secondary storage node, to the primary storage node in the storage cluster based on the switch indication.

10. The method according to any one of claims 6 to 9, wherein the container management cluster is a Kubernetes cluster.

11. A computer-readable storage medium, wherein the computer-readable storage medium stores a computer program comprising instructions to cause a data storage system to execute the steps of the method according to any one of claims 6 to 10.

## Patentansprüche

1. Datenspeichersystem, umfassend:
einen Speichercluster, wobei der Speichercluster zwei Speicherknoten umfasst und die zwei Speicherknoten ein primärer Speicherknoten beziehungsweise ein sekundärer Speicherknoten sind;
der primäre Speicherknoten dazu konfiguriert ist, Daten von einem Containerverwaltungscluster zu erhalten, die Daten in einer lokalen Datenbank des primären Speicherknotens zu speichern und die Daten an den sekundären Speicherknoten zu senden; und
der sekundäre Speicherknoten dazu konfiguriert ist, die Daten in einer lokalen Datenbank des sekundären Speicherknotens zu speichern,
wobei eine Proxy-Schnittstelle des primären Speicherknotens mit einem Anwendungsprogrammierschnittstellenserver API-Server in dem Containerverwaltungscluster kommuniziert; **dadurch gekennzeichnet, dass**:
die Proxy-Schnittstelle des primären Speicherknotens dazu konfiguriert ist, eine Protokollkonvertierung bei einer ersten Anfrage von dem API-Server durchzuführen, um eine von der lokalen Datenbank des primären Speicherknotens unterstützte zweite Anfrage zu erhalten; und die zweite Anfrage an die lokale Datenbank des primären Speicherknotens zu senden; und
die lokale Datenbank des primären Speicherknotens dazu konfiguriert ist, die in der zweiten Anfrage enthaltenen Daten zu speichern.

2. System nach Anspruch 1, wobei das Datenspeichersystem ferner einen Arbitrierungsknoten umfasst und der Arbitrierungsknoten separat mit dem primären Speicherknoten und dem sekundären Speicherknoten verbunden ist; und
der Arbitrierungsknoten zu Folgendem konfiguriert ist:
Überwachen von Arbeitsstatus des primären Speicherknotens und des sekundären Speicherknotens; und
wenn bestimmt wird, dass sich der Arbeitsstatus des primären Speicherknotens von "normal" auf "fehlgeschlagen" ändert und der Arbeitsstatus des sekundären Speicherknotens "normal" ist, Umschalten des sekundären Speicherknotens auf den primären Speicherknoten in dem Speichercluster.

3. System nach Anspruch 1, wobei es eine Vielzahl von Speicherclustern gibt, das Datenspeichersystem ferner einen Arbitrierungsknoten umfasst und der Arbitrierungsknoten separat mit zwei Speicherknoten in jedem Speichercluster verbunden ist; und
der Arbitrierungsknoten zu Folgendem konfiguriert ist:
Überwachen der Arbeitsstatus der zwei Speicherknoten in jedem Speichercluster; und
wenn bestimmt wird, dass sich ein Arbeitsstatus eines primären Speicherknotens von "normal" auf "fehlgeschlagen" ändert und ein Arbeitsstatus eines sekundären Speicherknotens in einer der Vielzahl von Speicherclustern "normal" ist, Umschalten des sekundären Speicherknotens in dem Speichercluster auf den primären Speicherknoten in dem Speichercluster.

4. System nach Anspruch 2 oder 3, wobei, wenn der sekundäre Speicherknoten auf den primären Speicherknoten in dem Speichercluster umgeschaltet wird, der Arbitrierungsknoten speziell dazu konfiguriert ist, eine Umschaltanzeige an den sekundären Speicherknoten zu senden, wobei die Umschaltanzeige dem sekundären Speicherknoten anzeigt, auf den primären Speicherknoten in dem Speichercluster umzuschalten; und
der sekundäre Speicherknoten ferner dazu konfiguriert ist, basierend auf der Umschaltanzeige auf den primären Speicherknoten in dem Speichercluster umzuschalten.

5. System nach einem der Ansprüche 1 bis 4, wobei der Containerverwaltungscluster ein Kubernetes-Cluster ist.

6. Datenspeicherverfahren, das auf ein Datenspeichersystem angewendet wird, wobei das Datenspeichersystem einen Speichercluster umfasst, der Speichercluster zwei Speicherknoten umfasst und die zwei Speicherknoten ein primärer Speicherknoten beziehungsweise ein sekundärer Speicherknoten sind; und
das Verfahren Folgendes umfasst:
Erhalten von Daten von einem Containerverwaltungscluster durch den primären Speicherknoten, der die Daten in einer lokalen Datenbank des primären Speicherknotens speichert und die Daten an den sekundären Speicherknoten sendet; und
Speichern der Daten in einer lokalen Datenbank des sekundären Speicherknotens durch den sekundären Speicherknoten,
wobei eine Proxy-Schnittstelle des primären Speicherknotens mit einem Schnittstellenserver API-Server in dem Containerverwaltungscluster kommuniziert; und
das Erhalten von Daten von einem Containerverwaltungscluster durch den primären Speicherknoten, der die Daten in einer lokalen Datenbank des primären Speicherknotens speichert, Folgendes umfasst:
Empfangen einer ersten Anfrage von dem API-Server (601) durch die Proxy-Schnittstelle des primären Speicherknotens;
Durchführen einer Protokollkonvertierung bei der ersten Anfrage, um eine von der lokalen Datenbank des primären Speicherknotens (602) unterstützte zweite Anfrage zu erhalten;
und Senden der zweiten Anfrage an die lokale Datenbank des primären Speicherknotens (603); und
Speichern der in der zweiten Anfrage (604) enthaltenen Daten durch die lokale Datenbank des primären Speicherknotens.

7. Verfahren nach Anspruch 6, wobei das Datenspeichersystem ferner einen Arbitrierungsknoten umfasst und der Arbitrierungsknoten separat mit dem primären Speicherknoten und dem sekundären Speicherknoten verbunden ist;
der Arbitrierungsknoten Arbeitsstatus des primären Speicherknotens und des sekundären Speicherknotens überwacht; und,
wenn sich der Arbeitsstatus des primären Speicherknotens von "normal" auf "fehlgeschlagen" ändert und der Arbeitsstatus des sekundären Speicherknotens "normal" ist, der Arbitrierungsknoten den sekundären Speicherknoten auf den primären Speicherknoten in dem Speichercluster umschaltet.

8. Verfahren nach Anspruch 6, wobei es eine Vielzahl von Speicherclustern gibt, das Datenspeichersystem ferner einen Arbitrierungsknoten umfasst und der Arbitrierungsknoten separat mit zwei Speicherknoten in jedem Speichercluster verbunden ist; der Arbitrierungsknoten Arbeitsstatus der zwei Speicherknoten in jedem Speichercluster überwacht; und
wenn sich ein Arbeitsstatus eines primären Speicherknotens von "normal" auf "fehlgeschlagen" ändert und ein Arbeitsstatus eines sekundären Speicherknotens in einer der Vielzahl von Speicherclustern "normal" ist, der Arbitrierungsknoten den sekundären Speicherknoten in dem Speichercluster auf den primären Speicherknoten in dem Speichercluster umschaltet.

9. Verfahren nach Anspruch 7 oder 8, wobei das Umschalten des sekundären Speicherknotens auf den primären Speicherknoten in dem Speichercluster durch den Arbitrierungsknoten Folgendes umfasst:
Senden einer Umschaltanzeige an den sekundären Speicherknoten durch den Arbitrierungsknoten, wobei die Umschaltanzeige dem sekundären Speicherknoten anzeigt, auf den primären Speicherknoten in dem Speichercluster umzuschalten; und
Umschalten auf den primären Speicherknoten in dem Speichercluster durch den sekundären Speicherknoten basierend auf der Umschaltanzeige.

10. Verfahren nach einem der Ansprüche 6 bis 9, wobei der Containerverwaltungscluster ein Kubernetes-Cluster ist.

11. Computerlesbares Speichermedium, wobei das computerlesbare Speichermedium ein Computerprogramm speichert, umfassend Anweisungen, um ein Datenspeichersystem dazu zu veranlassen, die Schritte des Verfahrens nach einem der Ansprüche 6 bis 10 auszuführen.

## Revendications

1. Système de stockage de données, comprenant :
un cluster de stockage, dans lequel le cluster de stockage comprend deux nœuds de stockage, et les deux nœuds de stockage sont respectivement un nœud de stockage primaire et un nœud de stockage secondaire ;
le nœud de stockage primaire est configuré pour obtenir des données d'un cluster de gestion de conteneurs, stocker les données dans une base de données locale du nœud de stockage primaire et envoyer les données au nœud de stockage secondaire ; et
le nœud de stockage secondaire est configuré pour stocker les données dans une base de données locale du nœud de stockage secondaire,
dans lequel une interface mandataire du nœud de stockage primaire communique avec un serveur d'API (interface de programmation d'application) de serveur dans le cluster de gestion de conteneurs ; **caractérisé en ce que** :
l'interface mandataire du nœud de stockage primaire est configurée pour réaliser une conversion de protocole lors d'une première requête provenant du serveur d'API, pour obtenir une seconde requête prise en charge par la base de données locale du nœud de stockage primaire ; et envoyer la seconde requête à la base de données locale du nœud de stockage primaire ; et
la base de données locale du nœud de stockage primaire est configurée pour stocker les données comprises dans la seconde requête.

2. Système selon la revendication 1, dans lequel le système de stockage de données comprend en outre un nœud d'arbitrage, et le nœud d'arbitrage est connecté séparément au nœud de stockage primaire et au nœud de stockage secondaire ; et
le nœud d'arbitrage est configuré pour :
surveiller des états de fonctionnement du nœud de stockage primaire et du nœud de stockage secondaire ; et
lors de la détermination que l'état de fonctionnement du nœud de stockage primaire passe de « normal » à « défaillant » et que l'état de fonctionnement du nœud de stockage secondaire est « normal », commuter le nœud de stockage secondaire vers le nœud de stockage primaire dans le cluster de stockage.

3. Système selon la revendication 1, dans lequel il existe une pluralité de clusters de stockage, le système de stockage de données comprend en outre un nœud d'arbitrage, et le nœud d'arbitrage est connecté séparément aux deux nœuds de stockage dans chaque cluster de stockage ; et
le nœud d'arbitrage est configuré pour :
surveiller des états de fonctionnement des deux nœuds de stockage dans chaque cluster de stockage ; et
lors de la détermination qu'un état de fonctionnement d'un nœud de stockage primaire passe de « normal » à « défaillant » et qu'un état de fonctionnement d'un nœud de stockage secondaire est « normal » dans l'un quelconque de la pluralité de clusters de stockage, commuter le nœud de stockage secondaire dans le cluster de stockage vers le nœud de stockage primaire dans le cluster de stockage.

4. Système selon la revendication 2 ou 3, dans lequel, lors de la commutation du nœud de stockage secondaire au nœud de stockage principal dans le cluster de stockage, le nœud d'arbitrage est spécifiquement configuré pour envoyer une indication de commutation au nœud de stockage secondaire, dans lequel l'indication de commutation indique au nœud de stockage secondaire de commuter vers le nœud de stockage primaire dans le cluster de stockage ; et
le nœud de stockage secondaire est en outre configuré pour commuter vers le nœud de stockage primaire du cluster de stockage en fonction de l'indication de commutation.

5. Système selon l'une quelconque des revendications 1 à 4, dans lequel le cluster de gestion de conteneurs est un cluster Kubernetes.

6. Procédé de stockage de données, appliqué à un système de stockage de données, dans lequel le système de stockage de données comprend un cluster de stockage, le cluster de stockage comprend deux nœuds de stockage, et les deux nœuds de stockage sont respectivement un nœud de stockage primaire et un nœud de stockage secondaire ; et
le procédé comprend :
l'obtention, par le nœud de stockage primaire, de données d'un cluster de gestion de conteneurs, le stockage des données dans une base de données locale du nœud de stockage primaire et l'envoi des données au nœud de stockage secondaire ; et
le stockage, par le nœud de stockage secondaire, des données dans une base de données locale du nœud de stockage secondaire, dans lequel une interface mandataire du nœud de stockage primaire communique avec un serveur d'API de serveur d'interface dans le cluster de gestion de conteneurs ; et
l'obtention, par le nœud de stockage primaire, de données d'un cluster de gestion de conteneurs, le stockage des données dans une base de données locale du nœud de stockage primaire **caractérisé en ce qu'**il comprend :
la réception, par l'interface mandataire du nœud de stockage primaire, d'une première requête du serveur d'API (601) ;
la réalisation d'une conversion de protocole sur la première requête, pour obtenir une seconde requête prise en charge par la base de données locale du nœud de stockage primaire (602) ;
et l'envoi de la seconde requête à la base de données locale du nœud de stockage primaire (603) ; et
le stockage, par la base de données locale du nœud de stockage primaire, des données comprises dans la seconde requête (604).

7. Procédé selon la revendication 6, dans lequel le système de stockage de données comprend en outre un nœud d'arbitrage, et le nœud d'arbitrage est connecté séparément au nœud de stockage primaire et au nœud de stockage secondaire ;
le nœud d'arbitrage surveille des états de fonctionnement du nœud de stockage primaire et du nœud de stockage secondaire ; et
lorsque l'état de fonctionnement du nœud de stockage primaire passe de « normal » à « défaillant » et que l'état de fonctionnement du nœud de stockage secondaire est « normal », le nœud d'arbitrage commute le nœud de stockage secondaire vers le nœud de stockage primaire dans le cluster de stockage.

8. Procédé selon la revendication 6, dans lequel il existe une pluralité de clusters de stockage, le système de stockage de données comprend en outre un nœud d'arbitrage, et le nœud d'arbitrage est connecté séparément aux deux nœuds de stockage dans chaque cluster de stockage ;
le nœud d'arbitrage surveille des états de fonctionnement des deux nœuds de stockage dans chaque cluster de stockage ; et
lorsqu'un état de fonctionnement d'un nœud de stockage primaire passe de « normal » à « défaillant » et qu'un état de fonctionnement d'un nœud de stockage secondaire est « normal » dans l'un quelconque de la pluralité de clusters de stockage, le nœud d'arbitrage commute le nœud de stockage secondaire dans le cluster de stockage vers le nœud de stockage primaire dans le cluster de stockage.

9. Procédé selon la revendication 7 ou 8, dans lequel le fait que le nœud d'arbitrage commute le nœud de stockage secondaire vers le nœud de stockage primaire dans le cluster de stockage, comprend :
l'envoi, par le nœud d'arbitrage, d'une indication de commutation au nœud de stockage secondaire, dans lequel l'indication de commutation indique au nœud de stockage secondaire de commuter vers le nœud de stockage primaire dans le cluster de stockage ; et
la commutation, par le nœud de stockage secondaire, vers le nœud de stockage primaire du cluster de stockage en fonction de l'indication de commutation.

10. Procédé selon l'une quelconque des revendications 6 à 9, dans lequel le cluster de gestion de conteneurs est un cluster Kubernetes.

11. Support de stockage lisible par ordinateur, dans lequel le support de stockage lisible par ordinateur stocke un programme d'ordinateur comprenant des instructions pour amener un système de stockage de données à exécuter les étapes du procédé selon l'une quelconque des revendications 6 à 10.
